# DEMANDE DE BREVET EUROPEEN

(11) **EP 1 662 172 A1**
(43) Date de publication de la demande: **31.05.2006**
(21) Numéro de dépôt: 04106176.3
(22) Date de dépôt: 30.11.2004
(51) Int. Cl.: F16F 9/348, F16F 9/516

(54) **Amortisseur hydraulique**

(71) Demandeur: Willé, Jean-Joseph, 4690 Wonck (BE); Dardenne, Daniel, 4682 Heure Le Romain (BE); Schoofs, Pascal, 4601 Argenteau (BE)
(72) Inventeur: Willé, Jean-Joseph, 4690 Wonck (BE); Dardenne, Daniel, 4682 Heure Le Romain (BE); Schoofs, Pascal, 4601 Argenteau (BE)
(74) Mandataire: Leherte, Georges M.L.M.

(57) **Abrégé**

L'invention concerne un amortisseur hydraulique (1), comprenant un cylindre (2) de fluide d'amortissement, séparé en deux chambres (3,4) par un piston (5) muni d'au moins un canal (6) permettant le passage de fluide d'amortissement entre lesdites chambres et d'un dispositif de régulation (7) du passage du fluide d'amortissement en phase de détente et/ou en phase de compression de l'amortisseur, tandis que le dispositif de régulation comprend au moins un système de rondelle(s) concave(s) (8) ("rondelles de Belleville") coopérant avec le ou les canal/canaux prévus dans le piston, de manière à contrôler la résistance du passage du fluide d'amortissement entre lesdites chambres en phase de détente et en phase de compression de l'amortisseur.

## Description

L'invention concerne des perfectionnements aux amortisseurs hydrauliques, largement utilisés dans tous les domaines nécessitant l'atténuation des mouvements et oscillations de masses diverses.
On connaît plus particulièrement les amortisseurs de type comprenant un cylindre de fluide d'amortissement, séparé en deux chambres par un piston, tandis qu'un dispositif permet un passage contrôlé du fluide entre les deux chambres en phase de détente et/ou en phase de compression de l'amortisseur.
De tels amortisseurs trouvent notamment application sur des véhicules, engins et remorques de tous types, en particulier les véhicules de type motocyclettes.

Un type d'amortisseurs hydrauliques bien connus comprend un cylindre de fluide d'amortissement, séparé en deux chambres par un piston muni d'orifices ou canaux de communication, permettant le passage de fluide d'amortissement entre lesdites chambres, tandis qu'un empilement de rondelles à caractéristiques déterminées règlent le passage du fluide d'amortissement en phase de détente au travers d'une première série d'orifices ou canaux du piston, et un autre empilement de rondelles à caractéristiques déterminées règlent le passage du fluide d'amortissement en phase de compression de l'amortisseur à travers d'une deuxième série d'orifices ou canaux du piston.
Les amortisseurs de ce type sont relativement compliqués à régler et à monter, par le nombre de pièces distinctes qu'ils impliquent et par le fait qu'une adaptation des caractéristiques d'amortissement implique un démontage de l'amortisseur afin de remplacer une partie de ces pièces.

La présente invention a pour objectif de remédier à ces inconvénients en offrant des amortisseurs d'un type nouveau.

Les amortisseurs hydrauliques selon l'invention, comprennent un cylindre de fluide d'amortissement, séparé en deux chambres par un piston muni d'au moins un canal permettant le passage de fluide d'amortissement entre lesdites chambres et d'un dispositif de régulation du passage du fluide d'amortissement en phase de détente et/ou en phase de compression de l'amortisseur, ledit dispositif de régulation comprenant un système de rondelle(s) concave(s) (également connues sous la désignation "rondelles de Belleville") coopérant avec le ou les canal/canaux prévus dans le piston, de manière à contrôler la résistance du passage du fluide d'amortissement entre lesdites chambres en phase de détente et en phase de compression de l'amortisseur.

L'expression "un système de rondelle(s) concave(s)", telle qu'utilisée dans le présent document, doit s'entendre dans le sens d'un système d'une ou plusieurs rondelles, selon n'importe quel type de positionnement ou empilage connu en soi pour l'utilisation de rondelles de Belleville.

Selon une caractéristique préférée de l'invention, le dispositif de régulation comprend deux rondelles concaves agissant sur le passage du fluide d'amortissement entre les chambres de l'amortisseur, en phase de détente et en phase de compression.
A cet effet, les propriétés des rondelles concaves, des canaux et des diverses sections de passage autour et entre les rondelles concaves sont choisies en fonction de la résistance souhaitée du passage du fluide d'amortissement entre les chambres, tant en phase de détente qu'en phase de compression ; la résistance au passage du fluide d'amortissement lors de la phase de détente peut ainsi, plus particulièrement, être distincte de la résistance au passage du fluide d'amortissement lors de la phase de compression de l'amortisseur.

Dans un mode de réalisation particulièrement intéressant de l'invention, notamment en tant qu'amortisseur arrière pour motocyclettes, la résistance au passage du fluide d'amortissement lors de la phase de détente est environ deux fois plus importante que la résistance au passage du fluide d'amortissement lors de la phase de compression de l'amortisseur.

Selon une autre particularité préférée de l'invention, le dispositif de régulation peut, en outre, comprendre des moyens pour régler la distance entre les rondelles et/ou une précontrainte des rondelles concaves.
Selon une caractéristique supplémentaire de l'invention, ces moyens pour régler la distance entre les rondelles et/ou une précontrainte des rondelles concaves sont, de préférence, accessibles à partir de l'extérieur de l'amortisseur, de manière à permettre un réglage des propriétés d'amortissement sans démonter l'amortisseur.
On peut ainsi prévoir que les moyens pour régler la distance entre et/ou la précontrainte sur les rondelles concaves puissent être actionnés par une rotation du piston de l'amortisseur.

L'amortisseur hydraulique selon l'invention peut par ailleurs comprendre une connexion vers une chambre pressurisée, connue en soi, mais particulièrement intéressante dans le contexte du dispositif de régulation spécifique de l'invention.

D'autres caractéristiques et particularités de l'amortisseur hydraulique selon l'invention apparaîtront à la lecture de la description, ci-après, d'un mode de réalisation particulier, exposé à titre d'exemple purement illustratif, en se référant aux dessins annexés, dans lesquels :
la figure 1 montre, schématiquement, un amortisseur hydraulique, selon l'invention, à régulation du passage du fluide d'amortissement par deux rondelles concaves ;
les figures 2 et 3 montrent, schématiquement, un agrandissement du système de régulation de l'amortisseur selon la figure 1, respectivement en phase de détente et en phase de compression.

Il est souligné que les détails de l'exemple qui suit ne limite en rien la portée de l'invention telle qu'exposée dans la description ci-dessus et telle qu'énoncée dans les revendications qui suivent.

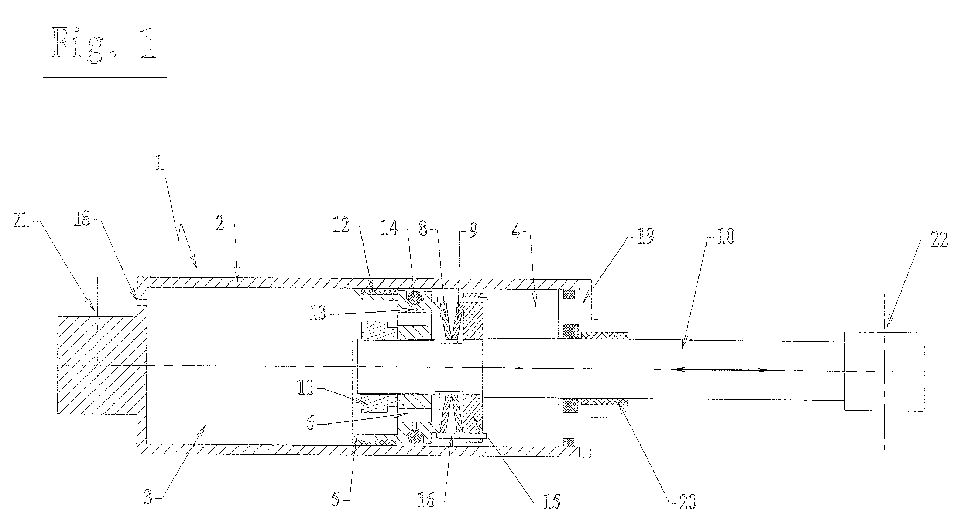

L'amortisseur hydraulique de la figure 1, désigné dans son ensemble par la référence 1, comprend un cylindre 2 (représenté à gauche sur le dessin) séparé en deux chambres hydrauliques 3 et 4 par un piston 5 (représenté à gauche sur le dessin) vissé sur une tige ou axe de piston 10 et maintenu en place par un contre-écrou 11.
Le piston comprend, par ailleurs, de manière connue en soi, un segment de guidage et d'étanchéité 12 et des canaux 13 de délestage de compression, coopérant avec un joint torique faisant office de clapet anti-retour 14.

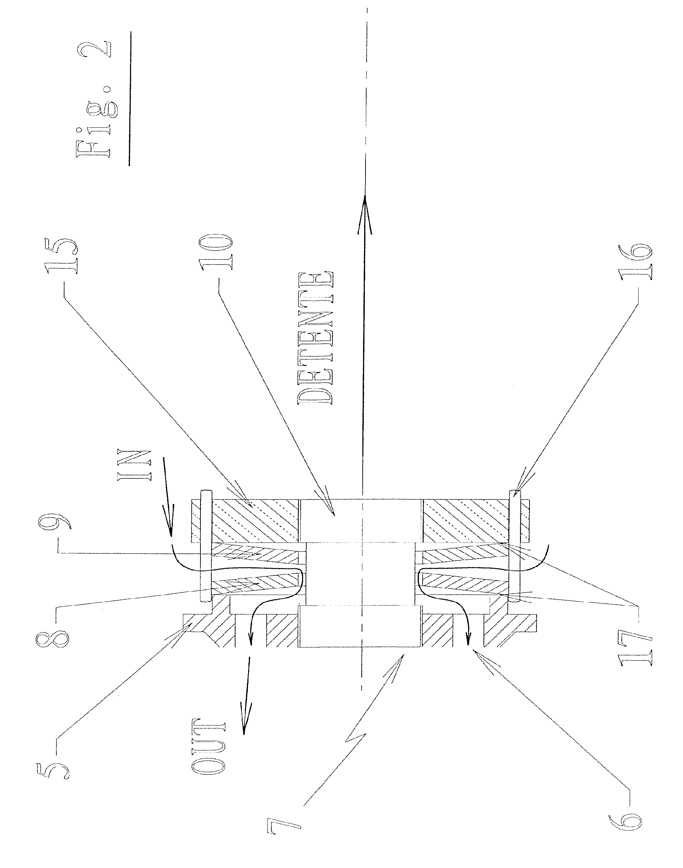

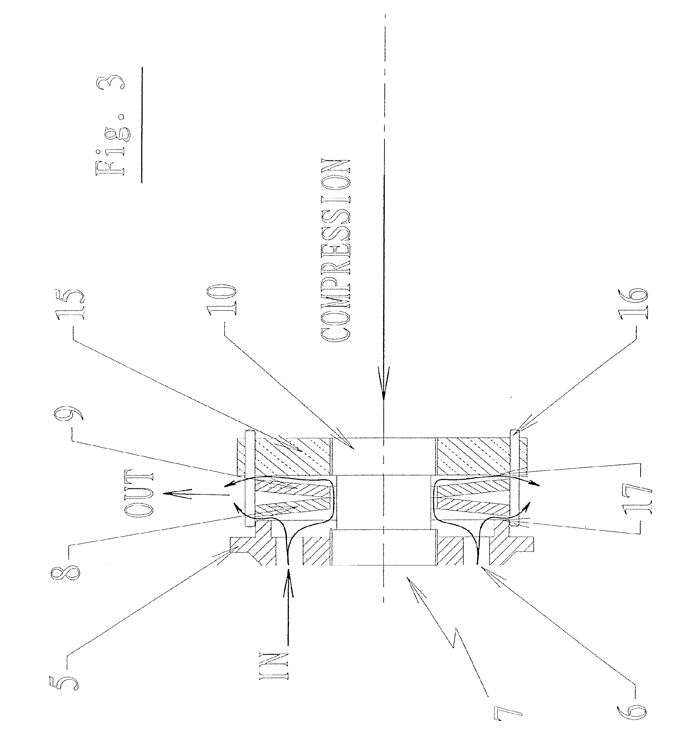

Le piston 5 est pourvu d'orifices ou canaux 6, permettant l'écoulement du fluide d'amortissement de la chambre 3 vers la chambre 4, lorsque le piston 5 est en phase de compression (déplacement vers la gauche sur le dessin) et de la chambre 4 vers la chambre 3, lorsque le piston 5 est en phase de détente (déplacement vers la droite sur le dessin). Un dispositif de régulation (désigné dans son ensemble par la référence 7), montré en agrandi aux figures 2 et 3, contrôle/règle l'écoulement du fluide par les canaux 6.
Le dispositif de régulation 7 comprend deux rondelles ressort concaves (dites "rondelles de Belleville"), entourant la tige ou axe 10 du piston 5 et placées avec leur parties convexes juxtaposées tandis que la partie concave de l'une d'elles (la rondelle 8) couvre les canaux 6 et la partie concave de l'autre (la rondelle 9) est maintenue par une rondelle d'appui 15 vissée sur l'axe du piston 10.
Lors de leur montage et leur serrage, les rondelles ressort 8 et 9 sont maintenues centrées sur leur diamètre extérieur (par exemple à l'aide de goupilles de centrage 16 fixées dans la rondelle d'appui 15).
Le serrage plus ou moins important de la rondelle d'appui 15 permet de régler la pré-charge appliquée aux rondelles ressort 8 et 9.

Ce dispositif de régulation, de construction particulièrement simple permet, une régulation très aisée de la résistance à l'écoulement du fluide d'amortissement, par le choix approprié de la dimension de l'orifice central des rondelles ressort 8 et 9, en fonction de la section totale de passage des canaux 6, mais surtout par la précontrainte appliquée sur les rondelles ressort 8 et 9. Le principe de fonctionnement du dispositif de régulation 7 apparaîtra clairement en se référant aux figures 2 et 3 :
en phase de détente (figure 2) la pression du fluide d'amortissement s'ajoute à la précontrainte sur le bord extérieur des rondelles de ressort 8 et 9 et maintient ainsi un contact étanche entre les rondelles 8 et 9 et les points de contact 17 avec le piston 5 et avec la rondelle d'appui 15, mais s'oppose à l'élasticité des rondelles ressort 8 et 9, au niveau de leurs bords intérieurs de manière à forcer un passage pour l'écoulement du fluide d'amortissement (illustré par le sens des flèche), qui est fonction de la précontrainte sur les rondelles ressort ;
en phase de compression (figure 3) la pression du fluide hydraulique s'oppose à l'élasticité des rondelles ressort 8 et 9 au niveau de leur bord extérieur et force ainsi un passage de section nettement plus importante (section environ 2 x plus importante) pour l'écoulement du fluide (illustré par le sens des flèche) qu'en phase de compression.

L'amortisseur hydraulique selon le mode de réalisation montré à la figure 1 comprend, par ailleurs,
une connexion 18 vers une chambre pressurisée, (vase d'expension)
un bouchon 19 avec un support de guidage 20 pour l'axe ou tige de piston 10,
un point de fixation 21 sur le cylindre 2 (représenté à gauche sur la figure), et
un point de fixation 22 sur la tige 10 de piston (représenté à droite sur la figure), l'un étant connecté à un élément fixe par rapport au châssis du véhicule et l'autre à un élément suspendu par rapport au châssis du véhicule, ou vice-versa.

## Revendications

1. Amortisseur hydraulique (1), comprenant un cylindre (2) de fluide d'amortissement, séparé en deux chambres (3) et (4) par un piston (5) muni d'au moins un canal (6) permettant le passage de fluide d'amortissement entre lesdites chambres (3) et (4) et d'un dispositif de régulation (7) du passage du fluide d'amortissement en phase de détente et/ou en phase de compression de l'amortisseur, **caractérisé en ce que** ledit dispositif de régulation (7) comprend un système de rondelle(s) concave(s) (8), (9) coopérant avec le ou les canal/canaux (6) prévus dans le piston (5), de manière à contrôler la résistance du passage du fluide d'amortissement entre lesdites chambres (3) et (4) en phase de détente et en phase de compression de l'amortisseur.

2. Amortisseur hydraulique selon la revendication 1, **caractérisé en ce que** ledit dispositif de régulation (7) comprend deux rondelles concaves (8), (9) coopérant avec le ou les canal/canaux (6), de manière à agir sur la résistance du passage du fluide d'amortissement entre les chambres (3) et (4) en phase de détente et en phase de compression de l'amortisseur.

3. Amortisseur hydraulique selon l'une quelconque des revendications 1 et 2, **caractérisé en ce que** les propriétés des rondelles concaves (8), (9), des canaux (6) et des diverses sections de passage autour et entre les rondelles concaves (8) et (9) sont choisies en fonction de la résistance souhaitée du passage du fluide d'amortissement entre les chambres (3) et (4) en phase de détente et en phase de compression de l'amortisseur.

4. Amortisseur hydraulique selon l'une quelconque des revendications précédentes, **caractérisé en ce que** la résistance au passage du fluide d'amortissement lors de la phase de détente est distincte de la résistance au passage du fluide d'amortissement lors de la phase de compression de l'amortisseur.

5. Amortisseur hydraulique selon l'une quelconque des revendications précédentes, **caractérisé en ce que** la résistance au passage du fluide d'amortissement lors de la phase de détente est environ deux fois plus importante que la résistance au passage du fluide d'amortissement lors de la phase de compression de l'amortisseur.

6. Amortisseur hydraulique selon l'une quelconque des revendications précédentes, **caractérisé en ce que** le dispositif de régulation (7) comprend des moyens permettant de régler la distance entre les rondelles et/ou une précontrainte des rondelles concaves (8), (9).

7. Amortisseur hydraulique selon la revendication 6, **caractérisé en ce que** lesdits moyens pour régler la distance entre les rondelles et/ou une précontrainte des rondelles concaves (8), (9) sont accessibles à partir de l'extérieur de l'amortisseur.

8. Amortisseur hydraulique selon la revendication 7, **caractérisé en ce que** lesdits moyens pour régler la distance entre et/ou la précontrainte sur les rondelles concaves (8), (9) sont actionnés par une rotation du piston de l'amortisseur.

9. Amortisseur hydraulique selon l'une quelconque des revendications précédentes, **caractérisé en ce que** le cylindre (2) comprend une connexion (18) vers une chambre pressurisée.

10. Amortisseur hydraulique selon l'une quelconque des revendications précédentes, **caractérisé en ce que** le système de rondelle(s) concave(s) consiste en un positionnement ou empilage quelconque d'une ou plusieurs rondelles de Belleville.
